# DEMANDE DE BREVET EUROPEEN

(11) **EP 1 046 532 A1**
(43) Date de publication de la demande: **25.10.2000**
(21) Numéro de dépôt: 00401079.9
(22) Date de dépôt: 18.04.2000
(51) Int. Cl.: B60J 7/10

(54) **Dispositif de bâchage et de débachâge pour un véhicule industriel comportant un tel dispositif**

(30) Priorité: 20.04.1999 FR 9904991
(71) Demandeur: General Trailers France, 91042 Evry Cedex (FR)
(72) Inventeur: Gressier, Christophe, 59251 Allennes les Marais (FR); Aubert, Patrice, 59241 Masnieres (FR)
(74) Mandataire: Michelet, Alain

(57) **Abrégé**

Dispositif de bâchage et de débâchage pour un véhicule industriel pourvu d'une bâche (10) comprenant des moyens (1, 2) pour renforcer un bord (11) de la bâche (10) à partir duquel la bâche doit s'enrouler lors d'un débâchage du véhicule et une règle (20) pourvue d'une gorge (21) destinée à recevoir, par enfilement, le bord (11) renforcé de la bâche (10).

## Description

L'invention concerne un dispositif de bâchage et de débâchage pour un véhicule industriel et un véhicule industriel comportant un tel dispositif.

Plusieurs technologies permettent de bâcher et de débâcher un véhicule industriel et notamment une benne. La plupart d'entre elles peuvent être classées selon la direction principale du mouvement de la bâche, par rapport à l'axe longitudinal du véhicule ou de la benne, lors du bâchage et du débâchage, à savoir dans les deux familles de bâchage longitudinal et de bâchage latéral.

L'invention sera mise à profit le mieux dans le cas d'un bâchage latéral. Pour cette raison, l'invention sera décrite pour cette application. Toutefois, les différentes dispositions qui seront décrites ci-après, peuvent facilement être adaptées à un bâchage longitudinal sans sortir du cadre de la présente invention.

Sur les véhicules industriels et les bennes, les bâches sont attachée, par un de leurs côtés, à un côté longitudinal du véhicule industriel ou de la benne et y restent attachées. Afin de pouvoir réaliser cette liaison, la bâche est pourvue d'oeillets à intervalles réguliers. La bâche se positionne alors dans des pontets solidaires du véhicule ou de la benne.

L'autre côté de la bâche, parallèle au premier, est attaché, de façon amovible, à l'autre côté longitudinal du véhicule ou de la benne. La fixation amovible se fait au moyen de sangles qui permettent non seulement d'attacher la bâche, mais également de tendre celle-ci à l'aide de boucles à treuil montées sur le bord du véhicule de la benne. Le bâchage et le débâchage se font à l'aide d'une règle autour de laquelle la bâche s'enroule.

Le but de l'invention est de faciliter la manipulation de la bâche lors du bâchage et du débâchage d'un véhicule ou d'une benne et d'obtenir une meilleure répartition des efforts sur la bâche, notamment lorsque celle-ci est tendue.

Par ailleurs, il serait souhaitable que l'invention permette de fixer la bâche alternativement d'un côté ou de l'autre du véhicule de façon à pouvoir concevoir un véhicule d'un seul type utilisable aussi bien dans des pays de circulation à gauche, comme dans ceux de circulation à droite, l'ouverture de la bâche pouvant se faire alors du côté approprié selon le type de circulation.

Le but de l'invention est atteint par un dispositif de bâchage pour un véhicule industriel pourvu d'une bâche, qui comprend des moyens pour renforcer au moins un bord de la bâche, à savoir au moins le bord de la bâche à partir duquel la bâche doit s'enrouler lors d'un débâchage du véhicule, et une règle pourvue d'une gorge destinée à recevoir, par enfilement, le bord renforcé de la bâche.

Cette disposition de l'invention apporte l'avantage de pouvoir fixer la règle au bord correspondant de la bâche de façon telle que la charge de traction, lors de la fixation de la bâche sur le véhicule se répartisse de façon homogène sur toute la longueur de la bâche.

Un autre avantage est que la bâche peut être pourvue d'un même type de bords sur deux côtés parallèles de la bâche, de façon que l'on puisse attacher la règle indifféremment sur un bord ou sur l'autre de la bâche.

Encore un autre avantage de cette conception de l'invention réside dans la possibilité de pouvoir pourvoir le véhicule sur un côté d'une gorge correspondant à celle de la règle et d'obtenir ainsi une répartition homogène des efforts agissant sur la bâche également du côté de la fixation permanente de la bâche.

L'invention concerne également les caractéristiques ci-après, considérées isolément ou selon toutes leurs combinaisons techniquement possibles.

Le dispositif comprend également au moins un profilé destiné à recevoir la règle, pour la fixer au véhicule, lorsque le véhicule est bâché.
Les moyens pour renforcer l'un ou plusieurs des bords de la bâche sont constitués par un jonc disposé au bord de la bâche.

Plus particulièrement, les moyens pour renforcer un bord de la bâche peuvent être constitués par un ourlet réalisé au bord de la bâche, le jonc étant alors disposé à l'intérieur de l'ourlet.

La réalisation des moyens pour renforcer un bord de bâche sous la forme d'un ourlet dans lequel est inséré un jonc s'étendant sur toute la longueur de la bâche, apporte l'avantage d'une répartition homogène des forces de traction agissant sur la bâche et par conséquent aussi sur la liaison entre la bâche et la règle, lorsque la bâche couvre le véhicule. Un tel avantage peut difficilement être obtenu avec un jonc ou un autre corps allongé fixé ponctuellement, même par un grand nombre de points, par exemple par cloutage du bord de la bâche sur ce jonc.

Une autre variante de réalisation des moyens pour renforcer un bord de la bâche pourrait consister à enrouler le bord jusqu'à obtention d'un boudin d'un diamètre comparable à celui d'un jonc et fixation de ce boudin par une couture. Indépendamment des difficultés d'une couture à pratiquer sur une telle épaisseur du matériau de la bâche, un tel boudin risque d'être difficile à introduire dans la gorge de la règle. Contrairement à cela, la réalisation des moyens pour renforcer le bord de la bâche sous la forme d'un ourlet avec, en son intérieur, un jonc, apporte l'avantage d'une plus grande rigidité de l'ensemble ourlet/jonc. De plus, cette réalisation permet d'introduire d'abord le bord de la bâche dans la gorge de la règle et d'introduire le jonc ensuite.

La gorge de la règle dans laquelle le bord renforcé doit être enfilé, est constitué avantageusement par un volume cylindrique avec une rainure longitudinale orientée vers l'extérieur dont la largeur est inférieure au diamètre du volume cylindrique de la gorge. Il va s'en dire que la forme précise de la gorge et celle du jonc aussi bien que leur dimensions, peuvent être adaptées l'une à l'autre, en tenant compte de l'épaisseur de la bâche, sans sortir du cadre de la présente invention.

La règle peut également être pourvue d'une seconde gorge répondant au même principe de conception que la première gorge, à savoir présenter un volume cylindrique et présenter une rainure longitudinale dont la largeur est inférieure au diamètre du volume cylindrique.

La gorge unique ou les deux gorges de la règle s'étendent sur toute la longueur de la règle. Toutefois, les dimensions et la forme des deux gorges de la règle peuvent être différentes les unes des autres.

L'introduction d'un bord de la bâche dans une gorge de la règle, et de façon correspondante aussi dans une gorge réalisée dans le véhicule, par enfilement, par opposition à une fixation par enclipsage ou toutes autres techniques utilisées jusqu'à maintenant, assure à la fois une facilité de manipulation lors de l'attachement ou du détachement de la bâche à la règle et/ou au véhicule et un attachement sûr sans risque de détachement accidentel.

Pour faciliter l'enroulement de la bâche autour de la règle lors du débâchage et le déroulement de la bâche de la règle lors du bâchage du véhicule, la règle est pourvue d'une manivelle.

Avantageusement, la manivelle est pourvue d'une poignée formée de façon à pouvoir coopérer avec des moyens d'arrêt permettant de maintenir la règle dans une position prédéfinie, lorsque la bâche est déroulée et la règle est tenue par un profilé.

Un moyen essentiel de l'invention est une bâche pour un véhicule industriel, cette bâche comprenant au moins un bord renforcé destiné à coopérer avec une règle pourvue d'une gorge destinée à recevoir, par enfilement, le bord renforcé.

Le but de l'invention est également atteint par un véhicule industriel pourvu d'une bâche et d'une structure de support pour la bâche, un tel véhicule étant également pourvu d'un dispositif de bâchage et de débâchage tel que décrit ci-avant.

L'invention concerne également l'une ou l'autre des caractéristiques techniques ci-après, considérées isolément ou dans toutes leurs combinaisons techniquement possibles:

Un véhicule dont la structure de support comporte des rives supérieures et des arceaux, est pourvu d'arceaux qui sont reliés aux rives supérieures, à au moins une de leurs extrémités, par une articulation comportant une liaison-glissière.

A la place de l'articulation comportant une liaison-glissière, les arceaux peuvent être reliés aux rives supérieures par une articulation comportant une liaison-pivot.

L'un et l'autre des deux types d'arceaux présentés ci-avant peuvent s'adapter aux déformations des faces latérales lors de l'utilisation du véhicule. Plus particulièrement, ils peuvent s'adapter à un éloignement relatif des deux rives supérieures l'une de l'autre. La tolérance maximale de ces déplacements est en général de l'ordre de quelques centimètres.

Le véhicule comprend un profil de rive et/ou une rive supérieure longitudinale, dans lequel ou respectivement laquelle est pratiquée une gorge destinée à recevoir, par enfilement, un bord renforcé d'une bâche.

Le véhicule est pourvu de moyens de positionnement permettant de placer un profilé, ou des profilés, destinés à recevoir la règle pour la fixer au véhicule, de façon que la bâche puisse être tendue.

D'autres avantages et caractéristiques de l'invention ressortiront à la lecture d'un exemple de réalisation décrit ci-après en référence aux dessins dans lesquels:

Les Figures 1 et 2 montrent le dispositif de l'invention en deux vues différentes selon un mode de réalisation.

La Figure 3 montre la règle du dispositif de l'invention en vue latérale.

La Figure 4 montre une sangle utilisable avec la règle du dispositif de l'invention.

La Figure 5 montre un profil pourvu d'une gorge pour recevoir une bâche selon l'invention

La Figure 6 montre une structure de support pour une bâche, la structure comprenant deux types différents d'arceaux selon l'invention.

Les Figures 7 et 8 représentent en détail une extrémité d'un arceau selon l'invention, l'extrémité étant pourvue d'une liaison glissière.

La Figure 9 représente une bâche supportée par deux rives supérieures longitudinales d'une structure de support, la bâche étant fixée sur une rive supérieure par un de ses bords et l'autre bord étant attaché à une règle du dispositif selon l'invention, et

Les Figures 10 et 11 représentent des moyens de fixation des bords avant et arrière d'une bâche fixée à un véhicule au moyen d'un dispositif selon l'invention.

La description du dispositif selon l'invention est donnée ci-après en partant d'une application sur un véhicule industriel tel qu'une semi-remorque avec une plate-forme sur laquelle est dressée une structure de support pour une bâche, cette structure étant représentée ici par deux rives supérieures longitudinales disposées à une hauteur donnée au-dessus de la plate-forme et reliées entre elles par des arceaux. Dans une application à une benne, les bords supérieurs longitudinaux correspondent aux rives supérieures longitudinales de la structure de support du véhicule industriel.

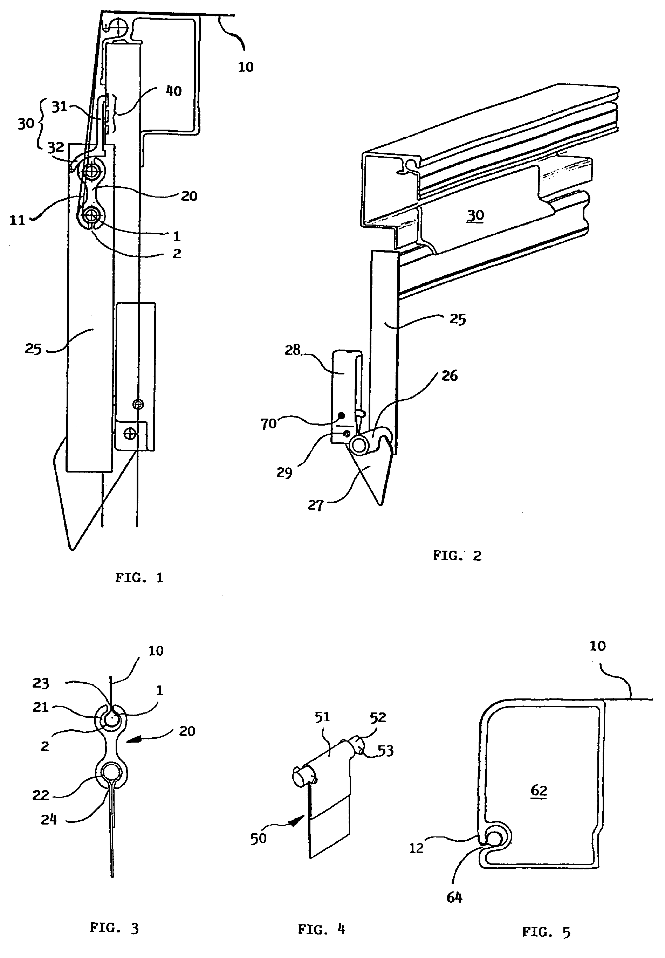

Le dispositif de bâchage et de débâchage représenté sur la Figure 1 comme un mode de réalisation préféré de l'invention comprend un jonc 1 disposé à l'intérieur d'un ourlet 2 réalisé à un premier bord 11 d'une bâche 10. Le jonc 1 et l'ourlet 2 renforcent le bord 11 de la bâche 10 de façon que le bord 11 de la bâche 10 puisse être introduit uniquement par enfilement dans une gorge 21 d'une règle 20. La règle 20 sert à enrouler et à dérouler la bâche lors de manipulations de bâchage et de débâchage du véhicule.

La règle 20 comporte avantageusement deux gorges 21 et 22 réalisées aux bords longitudinaux sur toute la longueur de la règle. Chacune des gorges 21 et 22 présente un volume intérieur essentiellement cylindrique de révolution et est ouvert vers l'extérieur; outre par ses extrémités, par une fente référencée respectivement 23 et 24, dont la largeur est inférieure au diamètre du volume intérieur de la gorge.

Grâce à cette conception, la règle 20 peut remplir deux fonctions. La première fonction est celle d'un outil pourvu d'une manivelle 25 avec une poignée 26, autour de laquelle la bâche 10 s'enroule lors d'une manipulation de débâchage du véhicule. En sens inverse, la bâche 10 est déroulée de la règle 20 lors d'une manipulation de bâchage du véhicule.

La deuxième fonction de la règle 20 est celle d'un moyen contribuant à la fixation de la bâche sur le véhicule. Cette fonction peut être remplie de deux façons différentes, soit à l'aide d'un profilé, soit à l'aide d'une sangle.

Selon cette première façon, la règle 20 coopère avec un profilé 30 attaché à la plate-forme du véhicule avec des moyens de positionnement 40. Le profilé 30 est un profilé allongé ayant essentiellement deux parties 31 et 32. La partie 31 est formée de façon à pouvoir être insérée et/ou attachée sur la face extérieure d'un bord de rive d'une plate-forme du véhicule. La partie 32 est formée, par exemple avec une section transversale en arc, de façon à limiter avec le bord de rive du véhicule un volume creux dans lequel peut être introduit la règle 20. La règle 20 est alors introduite, comme la Figure 1 le montre, de façon que la gorge 22 de la règle soit orientée vers la partie 32 du profilé 30 et que la gorge 21 soit orientée dans la direction opposée, c'est-à-dire essentiellement vers le bas. Selon cette disposition, la bâche descend alors du haut du véhicule jusqu'à la règle, passe le long de la règle et s'arrête, avec son bord 11, dans la gorge 21, tenue vers le bas, et est ainsi tendue.

Pour bloquer et maintenir la règle 20 dans cette position, le véhicule peut être équipé de moyens d'arrêt ou de blocage constitués essentiellement par un crochet pivotant 27. Avantageusement, le crochet 27 est logé dans un boîtier 28 comportant un axe 29 autour duquel le crochet 27 peut pivoter.

Le boîtier 28 est pourvu d'un orifice 70 destiné à recevoir une barrette, une goupille ou tout autre moyen permettant de bloquer le crochet 27 de façon que celui-ci bloque immanquablement la manivelle 25 lorsque la bâche est déroulée et tendue.

Les moyens de positionnement 40 de la règle 30 sur la plate-forme du véhicule peuvent être constitués par une platine pourvue, à des niveaux différents, de trous dans lesquels sont introduites des tiges de fixation selon le niveau désiré.

Un autre mode de réalisation des moyens de positionnement 40 consiste en une pluralité de rainures pratiquées sur le bord de rive de la plate-forme du véhicule, les unes parallèles aux autres. Cette disposition permet de compenser un allongement de la bâche 10 par un choix approprié du positionnement de la règle, c'est-à-dire par un choix approprié de la rainure dans laquelle le profilé 30 prend appui.

Le profilé 30 ne s'étend pas sur la longueur entière de la règle 20. En général, il est suffisant de prévoir trois profilés 30 ayant une longueur individuelle correspondant approximativement à un dixième de la longueur de la règle et de les répartir sur la longueur du véhicule.

La seconde façon de fixer la bâche sur le véhicule consiste à utiliser une sangle 50 et une boucle à treuil. La sangle 50 est pourvue d'un bord renforcé 51 obtenu par un ourlet dans lequel est introduit une tige 52 retenue en place par des ergots 53.

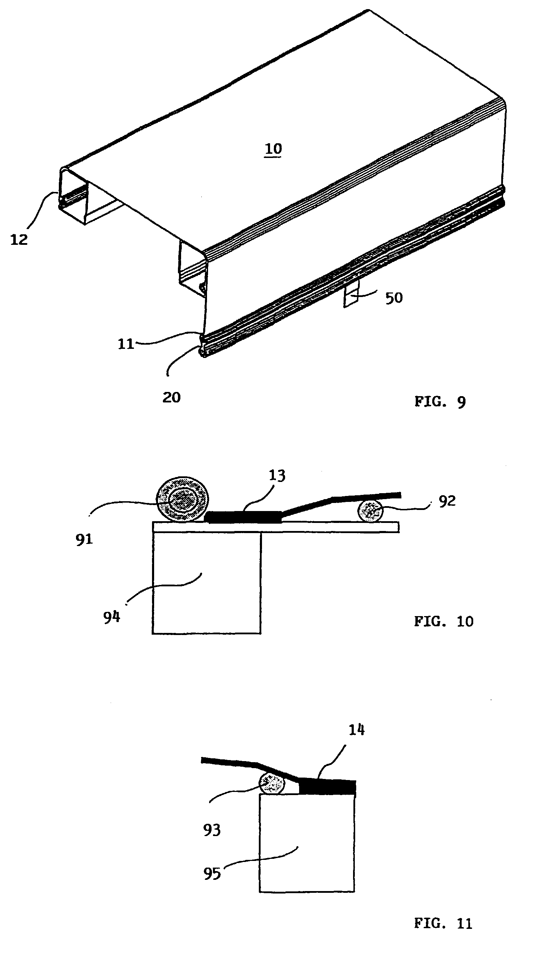

Les Figures 5 à 9 représentent la disposition et la fixation d'une bâche sur une structure 60 d'un véhicule industriel. La structure 60 comprend des rives supérieures longitudinales 61, 62 constituées chacune par un profilé extrudé. Les rives supérieures 61, 62 sont pourvues chacune sur une face extérieure orientée respectivement vers la droite et la gauche du véhicule, d'une gorge 63 ou 64 dont la forme et les dimensions correspondent à la gorge 21 de la règle 20. Cette gorge permet de fixer la bâche 10 par un deuxième bord 12 selon le même principe que la règle 20. Dans l'application représentée sur la Figure 9, la bâche 10 est posée sur des arceaux 65, 66, reliant la rive supérieure 61 à la rive supérieure 62 et descend alors le long de poteaux 69 jusqu'à la plate-forme du véhicule où elle est fixée comme décrit ci-avant.

Dans le cas d'une telle disposition de la bâche 10, la paroi non couverte par la bâche 10 peut alors être constituée par une seconde bâche ou par une paroi rigide.

En cas d'utilisation d'une seconde bâche, celle-ci est avantageusement fixée dans une seconde gorge pratiquée dans la rive supérieure.

L'utilisation d'un même type de profilé pour les deux rives supérieures 61 et 62 permet d'utiliser une même structure de support pour la (ou les) bâche(s), indépendamment des conditions d'accès latéral, c'est-à-dire pour un accès par un côté ou par l'autre du véhicule. Ceci est particulièrement intéressant pour les véhicules destinés à circuler dans un pays à circulation à droite ou dans un pays à circulation à gauche. Selon le sens d'ouverture souhaité, la bâche 10 est fixée dans la gorge 63 de la rive supérieure 61 ou dans la gorge 64 de la rive supérieure 62 et est déroulée et posée sur l'autre de ces deux rives supérieures.

Les arceaux 65 et 66 reliant la rive supérieure 61 à la rive supérieure 62 sont attachés à la rive supérieure 61 par une articulation. L'autre extrémité de chacun des arceaux est attachée à la rive supérieure 62 par une articulation, mais est pourvue de plus par une liaison destinée à compenser les déformations éventuelles des faces latérales du véhicule lors de l'utilisation de ce dernier. Afin de pouvoir compenser les déformations de la structure 60 et notamment afin de pouvoir supporter les déplacements relatifs de la rive supérieure 61 par rapport à la rive supérieure 62, les arceaux 65 et 66 répondent à ces mouvements relatifs par des mouvements de deux types différents.

La rive supérieure 65 est pourvue d'une liaison-glissière 67 comprenant une partie 67A et une partie 67B. La partie 67A est logée partiellement à l'intérieur de la partie 67B et est mobile par rapport à celle-ci. La course relative entre les parties 67A et 67B est à la fois définie et limitée par un évidement allongé 67C pratiqué dans une des deux parties et une tige 67D fixée dans l'autre partie et traversant l'évidement oblong 67C. L'arceau 65 peut être équipé d'une telle liaison glissière à ses deux extrémités.

L'arceau 66 diffère de l'arceau 65 en ce qu'au moins une de ses deux extrémités comporte une liaison-pivot 68. Cette liaison est conçue de façon que l'arceau 66 soit coudé le temps qu'aucune charge n'agit sur la structure 60. Cependant, lorsqu'une force agit de façon à écarter les rive supérieures 61 et 62 l'une de l'autre, l'arceau 66 se redresse. La tolérance compensée par l'un et l'autre des deux types d'arceau décrits ci-avant est de l'ordre de 60 mm.

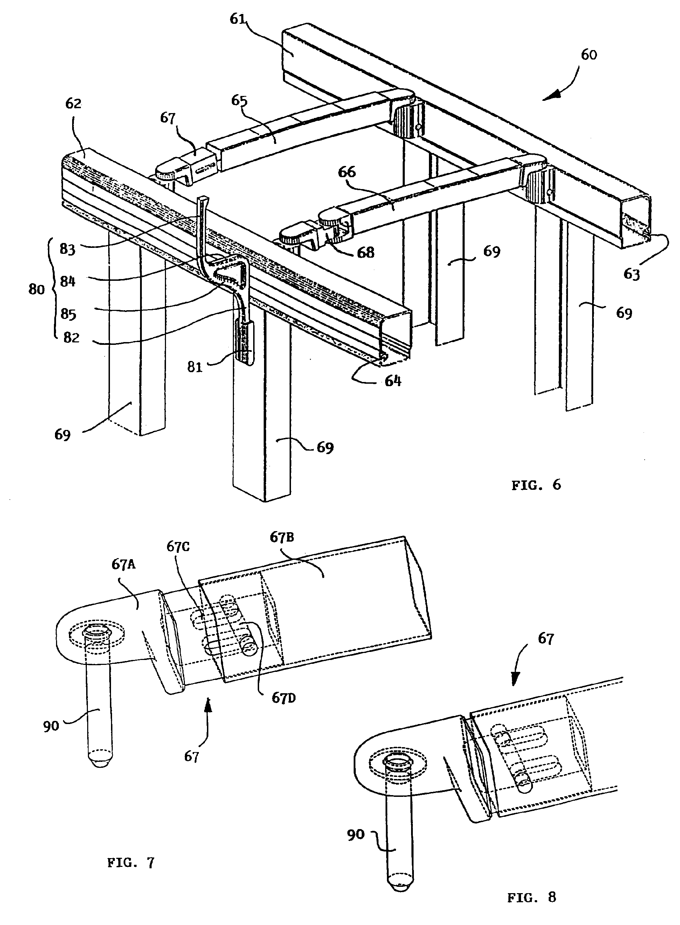

Les arceaux 65 et 66 sont attachés aux rives supérieures 61 et 62 de façon telle qu'ils puissent être enlevés facilement, ce qui est représenté sur les Figures 7 et 8 par une tige simple 90, sans aucun moyen de fixation. En variante, les arceaux 65 et 66 peuvent être attachés à l'une ou l'autre des deux rives supérieures 61 et 62 de façon à pouvoir être détachés facilement de l'une ou l'autre des deux rives supérieures et de rester attachés de façon pivotante, autour d'un angle de 90°, à l'autre des deux rives supérieures.

La structure 60 est pourvue de plusieurs supports de bâche 80 répartis sur la longueur du véhicule. Chaque support est solidaire d'un des poteaux 69 au moyen d'une pièce 81 à section carrée. Le support 80 est formé lui-même à partir d'un profilé à section carrée. Il comprend essentiellement une jambe 82 par laquelle le support 80 est inséré dans la pièce 81 selon l'une ou l'autre de deux orientations différentes, ainsi qu'une jambe 83, une partie 84 horizontale reliant les jambes 82 et 83 et un appui 85 formant un angle avec la partie 84 et reliant la jambe 83 à la jambe 82 à un niveau inférieur par rapport à la partie 84. Le support 80 est orienté perpendiculairement par rapport à l'étendue longitudinale de la rive supérieure 62 lorsque la bâche 10 est enroulée et doit libérer entièrement l'espace entre les deux rives supérieures 61 et 62 pour un chargement par le haut. Cette position du support 80 n'est cependant pas admise lorsque le véhicule roule, l'ensemble étant hors gabarit. Contrairement à cela, le support 80 est orienté parallèlement à l'étendue longitudinale de la rive supérieure 62 lorsque la bâche 10 est déroulée ou lorsque le véhicule est en circulation et la bâche 10, entièrement ou partiellement enroulée, est dans la zone de chargement entre les rives supérieures 61 et 62.

Les supports de bâche 80 peuvent être fabriqués en métal, de préférence en le même métal que les poteaux 69.

Toutefois, plus avantageusement, les supports 80 sont réalisés en un matériau synthétique tel qu'un matériau thermoplastique ou thermodurcissable ou un matériau composite. La pièce 81 sera alors fabriquée en ce même matériau.

L'utilisation de tels supports en matière synthétique permet essentiellement de réduire l'usure de la bâche au contact de celle-ci avec les supports. Ces supports résistent aux contraintes habituelles de l'environnement telles que les contraintes chimiques dues aux hydrocarbures, aux acides, notamment l'acide phosphorique, aux bases et aux détergents. Les supports en matière synthétique ont sensiblement le même comportement structurel que les pièces existantes en aluminium.

Les Figures 10 et 11 montrent très schématiquement des moyens pour fixer la bâche 10 aux bords 13 et 14 orientés respectivement vers l'avant et vers l'arrière du véhicule, de façon que la couverture du véhicule par la bâche 10 soit étanche. A cet effet, un élément rond 91, par exemple un tube rond, est fixé sur un arceau 94 constituant une rive supérieure, face avant, de façon que la bâche 10 puisse être glissée sous le tuyau 91 et coincé par celui-ci. Un rond 92 d'un diamètre inférieur à celui du tube 1 soulève la bâche juste avant la zone de coincement et évite ainsi le passage de l'eau dans la zone de chargement. Avantageusement, le bord 13 de la bâche 10 est lesté sur la largeur entière pour faciliter la fixation de la bâche 10.

Du côté arrière du véhicule, un arceau ou une traverse supérieur(e) arrière 95 de la structure 60 est pourvu(e) d'un rond 93 servant à rehausser la bâche 10 proche de son bord 14 qui est lesté et tenu en contact avec la traverse 95 par la tension exercée par le dispositif de bâchage et de débâchage par lequel la bâche 10 est fixée.

Les signes de référence insérés après les caractéristiques techniques mentionnées dans les revendications, ont pour seul but de faciliter la compréhension de ces dernières, et n'en limitent aucunement la portée.

## Revendications

1. Dispositif de bâchage et de débâchage pour un véhicule industriel pourvu d'une bâche (10), comprenant des moyens (1, 2) pour renforcer un bord (11) de la bâche (10) à partir duquel la bâche doit s'enrouler lors d'un débâchage du véhicule, caractérisé en ce qu'il comprend et une règle (20) pourvue d'une gorge (21) destinée à recevoir, par enfilement, le bord (11) renforcé de la bâche (10).

2. Dispositif selon la revendication 1, caractérisé en ce qu'il comprend au moins un profilé (30) destiné à recevoir la règle (20), pour la fixer au véhicule, lorsque le véhicule est bâché.

3. Dispositif selon la revendication 1 ou 2, caractérisé en ce que les moyens (1, 2) pour renforcer un bord de la bâche sont constitués par un jonc (1) disposé au bord de la bâche.

4. Dispositif selon l'une quelconque des revendications 1 à 3, caractérisé en ce que les moyens (1, 2) pour renforcer un bord (11) de la bâche (10) sont constitués par un ourlet (2) réalisé au bord de la bâche et un jonc (1) disposé à l'intérieur de l'ourlet.

5. Dispositif selon l'une quelconque des revendications 1 à 4, caractérisé en ce que la règle (20) est pourvue d'une seconde gorge (22) destinée à recevoir, par enfilement, une sangle (50) pourvue d'un bord (51) renforcé.

6. Dispositif selon l'une quelconque des revendications 1 à 5, caractérisé en ce que la règle (21) est pourvue d'une manivelle (25).

7. Bâche pour un véhicule industriel, caractérisée en ce qu'elle comprend au moins un bord (11) renforcé destiné à coopérer avec une règle (20) pourvue d'une gorge (21) destiné à recevoir, par enfilement, le bord (11) renforcé.

8. Véhicule industriel pourvu d'une bâche et d'une structure de support (60) pour la bâche (10), caractérisé en ce qu'il est également pourvu d'un dispositif de bâchage et de débâchage selon l'une quelconque des revendications 1 à 5.

9. Véhicule selon la revendication 8, la structure de support (60) comportant des rives supérieures (61, 62) et des arceaux (65, 66), caractérisé en ce que les arceaux (65) sont reliés aux rives supérieures (61, 62), à au moins une de leurs extrémités, par une articulation comportant une liaison-glissière (67).

10. Véhicule selon la revendication 8, la structure de support comportant des rives supérieures (61, 62) et des arceaux (65, 65), caractérisé en ce que les arceaux (66) sont reliés aux rives supérieures (61, 62), à au moins une de leurs extrémités, par une articulation comportant une liaison pivot (68).

11. Véhicule selon l'une quelconque des revendications 8 à 10, caractérisé en ce que au moins une des rives supérieures (61, 62) est pourvue d'une gorge (63, 64) destinée à recevoir, par enfilement, un bord (11) renforcé de la bâche.

12. Véhicule selon l'une quelconque des revendications 8 à 11, caractérisé en ce qu'il est pourvu de moyens de positionnement (40) permettant de placer le (ou les) profilé(s) (30) destiné(s) à recevoir la règle (20) de façon que la bâche (10) soit tendue.
